# EUROPÄISCHE PATENTSCHRIFT

(11) **EP 2 501 007 B1**
(45) Veröffentlichungstag und Bekanntmachung des Hinweises auf die Patenterteilung: **03.09.2014**
(21) Anmeldenummer: 12156053.6
(22) Anmeldetag: 17.02.2012
(51) Int. Cl.: H02G 7/20

(54) **Freileitungseinrichtung, insbesondere für Hochspannungsfreileitungen**
Overhead line device, in particular for high voltage overhead lines
Installation de ligne aérienne, notamment pour lignes aériennes à haute tension

(30) Priorität: 18.03.2011 DE 102011001397
(43) Veröffentlichungstag der Anmeldung: 19.09.2012
(73) Patentinhaber: SAG GmbH, 63225 Langen (DE)
(72) Erfinder: Pohlmann, Heinrich, 64390 Erzhausen (DE); Schliephake, Ludwig, 86157 Augsburg (DE)
(74) Vertreter: Rohmann, Michael

(56) Entgegenhaltungen:
- WO-A1-03/077393
- FR-A- 892 241
- FR-A1- 2 225 861
- FR-A1- 2 274 154
- US-A- 3 139 482
- US-A- 3 229 025

## Beschreibung

Die Erfindung betrifft eine Freileitungseinrichtung, insbesondere für Hochspannungsfreileitungen, - mit einer Mehrzahl von Masten und mit zwischen den Masten verlaufenden und an den Masten fixierten Leiterseilen. Bei den Leiterseilen handelt es sich insbesondere um Phasenseile eines Drehstromsystems. Bevorzugt werden dabei zwei Stromkreise mit sechs Leiterseilen bzw. Phasenseilen (sogenannte 2-systemige Leitung).

Freileitungseinrichtungen der eingangs genannten Art sind aus der Praxis in verschiedenen Ausführungsformen bekannt wie in WO 03/077393. Die Abstände der Maste betragen in Abhängigkeit von den jeweiligen Bedingungen in der Regel 300 bis 600 m. Die zwischen den Masten verlaufenden Leiterseile haben zwischen zwei Masten einen relativ großen Durchhang. Durchhang meint dabei den maximalen Abstand des Leiterseils von einer durch die Aufhängungspunkte verlaufenden gedachten Linie bzw. Geraden. Die Leiterseile können nicht stramm gespannt werden, da sie temperaturabhängigen Zugspannungen unterliegen. Übereinander angeordnete Leiterseile müssen fernerhin einen relativ großen Abstand voneinander aufweisen. Die Leiterseile können sich nämlich im Betrieb auf bis zu 80 °C erwärmen und dann vergrößert sich ihr Durchhang deutlich. Das kann bei zu geringen Abständen zu einer gegenseitigen Störung bzw. Berührung der Leiterseile führen. Aufgrund der einzuhaltenden relativ großen Abstände zwischen übereinander angeordneten Leiterseilen müssen auch die Maste entsprechend hoch ausgeführt sein. Dies insbesondere auch deshalb, weil ein vorgeschriebener Mindestbodenabstand zwischen dem untersten Leiterseil und dem Erdboden eingehalten werden muss. Um weiterhin eine ausreichende Stabilität und insbesondere Biegesteifigkeit der Maste sicherzustellen, werden diese häufig sehr breit und voluminös und unter Einbeziehung einer Vielzahl von Mastkomponenten ausgebildet. Sehr hohe und breite bzw. voluminöse Masten verunstalten aber das Landschaftsbild. Insoweit sind die bekannten Freileitungseinrichtungen verbesserungsbedürftig.

Dementsprechend liegt der Erfindung das technische Problem zugrunde, eine Freileitungseinrichtung der eingangs genannten Art anzugeben, bei der die vorstehend beschriebenen Nachteile vermieden werden und bei der insbesondere Masten mit geringer Höhe und geringer Breite bzw. geringem Volumen eingesetzt werden können.

Zur Lösung dieses technischen Problems lehrt die Erfindung eine Freileitungseinrichtung, insbesondere für Hochspannungsfreileitungen, - mit einer Mehrzahl von Masten und mit zwischen den Masten verlaufenden und an den Masten fixierten Leiterseilen, wobei zumindest ein zwischen den Masten verlaufendes und an den Masten fixiertes Stabilisierungsseil gespannt ist,
wobei das Stabilisierungsseil oberhalb zumindest eines Teils der Leiterseile angeordnet ist und wobei zumindest ein Teil bzw. einige der Leiterseile in den Bereichen zwischen zwei Masten jeweils an zumindest einem Aufhängungsort bzw. Aufhängungspunkt an dem Stabilisierungsseil, den Durchhang der Leiterseile reduzierend, aufgehängt ist/sind.

Dass durch die Aufhängung der Leiterseile an dem Stabilisierungsseil der Durchhang der Leiterseile reduziert wird, meint im Rahmen der Erfindung, dass der Durchhang nach der erfindungsgemäßen Aufhängung geringer ist als der Durchhang der Leiterseile ohne die erfindungsgemäßen Aufhängungsmaßnahmen. Wie oben bereits dargelegt, meint Durchhang den maximalen Abstand des Leiterseils von einer durch zwei Aufhängungspunkte des Leiterseils bzw. durch zwei benachbarte Aufhängungspunkte des Leiterseils gelegte gedachte Linie bzw. Gerade. Durch die erfindungsgemäße Aufhängung werden die Leiterseile also gleichsam nach oben zum Stabilisierungsseil gezogen. Zweckmäßigerweise werden alle Leiterseile der erfindungsgemäßen Freileitungseinrichtung an dem Stabilisierungsseil erfindungsgemäß aufgehängt. Es liegt im Rahmen der Erfindung, dass die Aufhängung der Leiterseile an dem Stabilisierungsseil über Isolatoren bzw. Isolierelemente erfolgt.

Die im Rahmen der Erfindung eingesetzten Maste werden auch als Freileitungsmaste bezeichnet. Grundsätzlich können für die erfindungsgemäße Freileitungseinrichtung verschiedene Ausführungsformen von Masten eingesetzt werden. Nach einer bevorzugten Ausführungsform der Erfindung sind die Masten als Gittermasten bzw. Stahlgittermasten ausgeführt. Gemäß einer anderen Ausführungsform können auch Stahlrohrmasten oder Betonmasten eingesetzt werden. Grundsätzlich ist es auch denkbar, Holzmasten zu verwenden. Als Mast wird im Rahmen der Erfindung auch ein Aggregat aus zwei direkt benachbarten Mastelementen verstanden, wobei diese Mastelemente vorzugsweise durch Querstreben miteinander verbunden sind. Mast meint im Rahmen der Erfindung auch ein Portal aus benachbarten Mastelementen, die insbesondere an ihrer Oberseite über eine Traverse miteinander verbunden sind.

Nach einer sehr bevorzugten Ausführungsform, der im Rahmen der Erfindung besondere Bedeutung zukommt, ist das Stabilisierungsseil zwischen den Masten - die Auslenkung der Masten in Leitungsrichtung reduzierend - gespannt bzw. aufgespannt. In Leitungsrichtung meint hier insbesondere in Richtung des Stabilisierungsseiles bzw. in Längsrichtung der Freileitungseinrichtung. Zweckmäßigerweise wird das Stabilisierungsseil möglichst stramm und flach sowie mit möglichst geringem Durchhang gespannt. Das ist bei dem Stabilisierungsseil möglich, da es im Gegensatz zu den Leiterseilen im Normalfall lediglich auf die Umgebungstemperatur erwärmt wird. Durch die erfindungsgemäße Spannung des Stabilisierungsseils zwischen den Masten erfolgt eine effektive Stabilisierung der Masten in Bezug auf Auslenkungen in Leitungsrichtung. Die Masten funktionieren im Gegensatz zu vielen aus dem Stand der Technik bekannten Masten zumindest im Wesentlichen lediglich als Druckstützen. Das hat den Vorteil, dass die im Rahmen der erfindungsgemäßen Freileitungseinrichtung eingesetzten Masten im Hinblick auf das erfindungsgemäße technische Problem relativ schmal und filigran ausgebildet sein können.

Eine bevorzugte Ausführungsform der Erfindung ist dadurch gekennzeichnet, dass bei einem Mastabstand von 200 bis 600 m, insbesondere bei einem Mastabstand von 250 bis 450 m der Durchhang des Stabilisierungsseils bei einer Temperatur von 10 °C 1 bis 4 m, bevorzugt 1,5 bis 3,5 m und sehr bevorzugt 2 bis 3 m beträgt. Mastabstand meint hier den Abstand von zwei in Längsrichtung der erfindungsgemäßen Freileitungseinrichtung hintereinander angeordneten Masten, wobei zwischen diesen beiden Masten die erfindungsgemäße Aufhängung der Leiterseile stattfindet. Der Durchhang des Stabilisierungsseils ist gemäß dieser bevorzugten Ausführungsform deutlich geringer als der Durchhang der Leiterseile bei dem genannten Mastabstand und bei der genannten Temperatur ohne die erfindungsgemäße Aufhängung.

Vorzugsweise beträgt der Durchmesser des Stabilisierungsseils 2,5 bis 10 cm, bevorzugt 3 bis 8 cm und sehr bevorzugt 4 bis 7 cm. Nach einer Ausführungsvariante besteht das Stabilisierungsseil aus Stahl bzw. aus Stahldrähten. Eine andere Ausführungsform sieht vor, dass das Stabilisierungsseil aus Stalum-Drähten besteht. Dabei handelt es sich um mit Aluminium beschichtete Stahldrähte.

Gemäß einer sehr empfohlenen Ausführungsform der Erfindung ist das Stabilisierungsseil das Erdseil der Freileitungseinrichtung. Bei dem Stabilisierungsseil handelt es sich dann also um ein geerdetes elektrisch leitfähiges Seil. Zweckmäßigerweise ist das Stabilisierungsseil in Bezug auf die Höhe h eines Mastes im oberen Drittel, vorzugsweise im oberen Viertel des Mastes an dem Mast fixiert. Nach einer bevorzugten Ausführungsvariante ist das Stabilisierungsseil an der Spitze eines Mastes bzw. an den Spitzen der Masten fixiert. Es liegt im Rahmen der Erfindung, dass das Stabilisierungsseil über allen Leiterseilen bzw. oberhalb von allen Leiterseilen angeordnet ist bzw. an den Masten fixiert ist.

Gemäß einer Ausführungsvariante sind zumindest zwei bzw. zwei Stabilisierungsseile vorgesehen. Dann ist zweckmäßigerweise ein Teil der Leiterseile an dem einen Stabilisierungsseil und ein anderer Teil der Leiterseile an dem anderen Stabilisierungsseil aufgehängt. Zweckmäßigerweise sind die beiden vorstehend genannten Stabilisierungsseile nebeneinander angeordnet bzw. in einer horizontalen Ebene angeordnet.

Eine sehr bevorzugte Ausführungsform der Erfindung ist dadurch gekennzeichnet, dass bei einem Mastabstand von 200 bis 600 m, insbesondere bei einem Mastabstand von 250 bis 450 m die Aufhängung der Leiterseile an dem bzw. an einem Stabilisierungsseil an zumindest zwei Aufhängungspunkten erfolgt. - Empfohlenermaßen weisen zwei übereinander angeordnete Leiterseile einen gegenseitigen bzw. einen vertikalen Abstand von 3 bis 5 m, bevorzugt von 3,5 bis 4,5 m auf. Die vorgenannten Abstandsbereiche gelten vorzugsweise für den bereits oben genannten Mastabstand von 200 bis 600 m, insbesondere für einen Mastabstand von 250 bis 450 m.

Es liegt im Rahmen der Erfindung, dass die erfindungsgemäß aufgehängten Leiterseile zwischen zwei Aufhängungspunkten bei einer Temperatur von 10 °C einen Durchhang von 0,6 bis 2 m, bevorzugt von 0,8 bis 1,6 m und sehr bevorzugt von 1 bis 1, 4 m aufweisen. Aufhängungspunkte meint dabei zwei benachbarte Aufhängungspunkte an dem Stabilisierungsseil oder einen Aufhängungspunkt am Mast und einen Aufhängungspunkt am Stabilisierungsseil. Die vorgenannten Durchhangswerte gelten insbesondere für den oben bereits genannten bevorzugten Mastabstand von 200 bis 600 m und vor allem für einen Mastabstand von 250 bis 450 m.

Es liegt im Rahmen der Erfindung, dass die Leiterseile Komponenten eines Drehstromsystems sind und dass drei Leiterseile bzw. Phasenseile oder 3 • x Leiterseile (2) (x = ganze Zahl) vorhanden sind. Wenn die erfindungsgemäße Freileitungseinrichtung lediglich einen Stromkreis umfasst, sind drei Leiterseile bzw. Phasenseile vorhanden. Nach bevorzugter Ausführungsform der Erfindung weist die Freileitungseinrichtung zwei Stromkreise und somit sechs Leiterseile bzw. Phasenseile auf. Dann handelt es sich um eine sogenannte 2-systemige Freileitungseinrichtung.

Der Erfindung liegt zunächst die Erkenntnis zugrunde, dass aufgrund der erfindungsgemäßen Aufhängung der Leiterseile an dem Stabilisierungsseil die Durchhänge der Leiterseile deutlich geringer sind und dass deshalb die Abstände bzw. die vertikalen Abstände zwischen den einzelnen Leiterseilen viel geringer gewählt werden können als bei den aus der Praxis bekannten Freileitungseinrichtungen. Unter Einhaltung des geforderten Mindestbodenabstandes kann deshalb im Vergleich zu den bekannten Masten von Freileitungseinrichtungen die Masthöhe deutlich geringer gehalten werden. Dadurch fällt der Mast im Landschaftsbild weniger auf und somit wird das Landschaftsbild auch weniger verunstaltet. Der Erfindung liegt weiterhin die Erkenntnis zugrunde, dass durch die erfindungsgemäße Spannung des Stabilisierungsseils zwischen den Masten die Masten bezüglich einer eventuellen Auslenkung in Leitungsrichtung hervorragend stabilisiert werden. Demzufolge müssen die Masten nicht mehr so breit und voluminös ausgeführt werden wie viele aus dem Stand der Technik bekannte Masten. Für die erfindungsgemäße Freileitungseinrichtung können also schmale und filigrane Masten eingesetzt werden. Auch dadurch wird das Landschaftsbild weniger beeinträchtigt als bei vielen bekannten Freileitungseinrichtungen. Erwähnt werden muss weiterhin, dass durch die erfindungsgemäße Aufhängung der Leiterseile an dem Stabilisierungsseil die seitliche Auslenkung der Leiterseile, beispielsweise aufgrund von Windeinflüssen reduziert wird. Dadurch wird auch die für die erfindungsgemäße Freileitungseinrichtung erforderliche Trasse schmaler als bei vielen aus der Praxis bekannten Freileitungseinrichtungen. Im Ergebnis dürfte die Akzeptanz bezüglich einer erfindungsgemäßen Freileitungseinrichtung deutlich größer sein, als bei bislang bekannten Freileitungseinrichtungen und somit dürfte die Genehmigung für eine erfindungsgemäße Freileitungseinrichtung einfacher zu erhalten sein. Schließlich ist noch darauf hinzuweisen, dass die erfindungsgemäße Freileitungseinrichtung auf relativ einfache und wenig aufwendige Weise realisiert werden kann und somit auch verhältnismäßig kostengünstig verwirklicht werden kann.

Nachfolgend wird die Erfindung anhand einer lediglich ein Ausführungsbeispiel darstellenden Zeichnung näher erläutert. Es zeigen in schematischer Darstellung:
- Fig. 1a: einen Schnitt durch eine Freileitungseinrichtung nach dem Stand der Technik,
- Fig. 1b: den Gegenstand nach Fig. 1a aus Richtung des Pfeiles A,
- Fig. 2a: einen Schnitt durch eine erfindungsgemäße Freileitungseinrichtung,
- Fig. 2b: den Gegenstand nach Fig. 2a aus Richtung des Pfeiles A,
- Fig. 2c: eine perspektivische Darstellung einer erfindungsgemäßen Freileitungseinrichtung,
- Fig. 3: den Gegenstand gemäß Fig. 2a in einer anderen Ausführungsform,
- Fig. 4: den Gegenstand nach Fig. 2a in einer weiteren Ausführungsform,
- Fig. 5a: den Gegenstand nach Fig. 2a in einer zusätzlichen Ausführungsform,
- Fig. 5b: den Gegenstand gemäß Fig. 5a aus Richtung des Pfeiles A,
- Fig. 5c: einen Schnitt B-B durch die Freileitungseinrichtung nach Fig. 5b und
- Fig. 5d: eine Draufsicht aus Richtung des Pfeiles C auf den Gegenstand nach Fig. 5b.

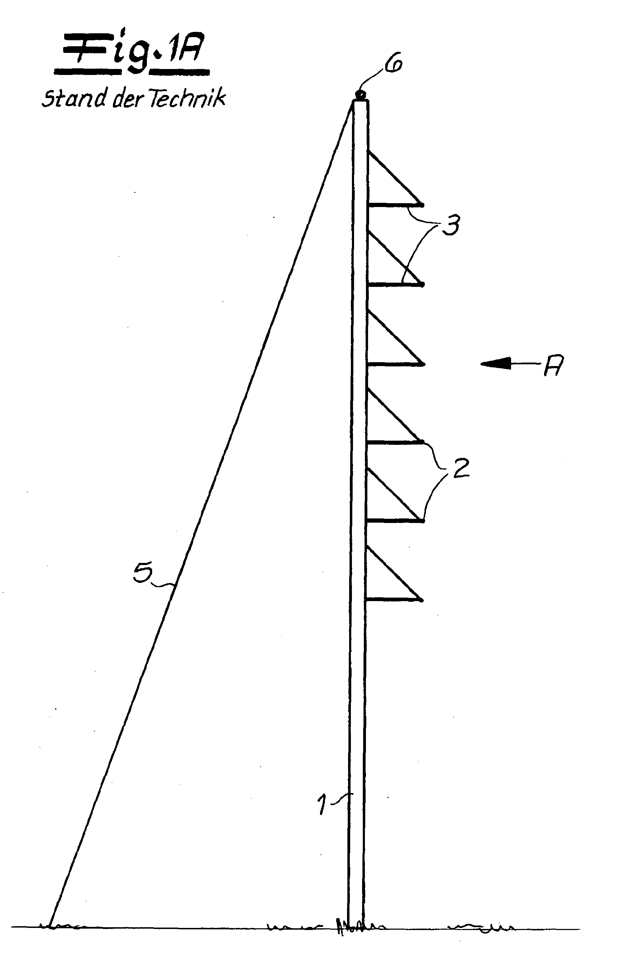

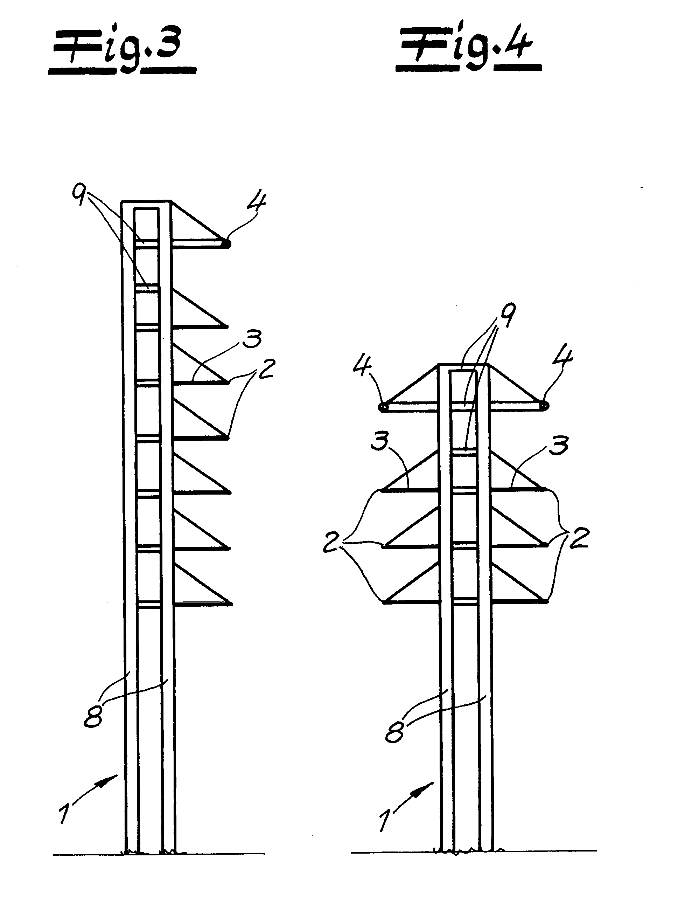

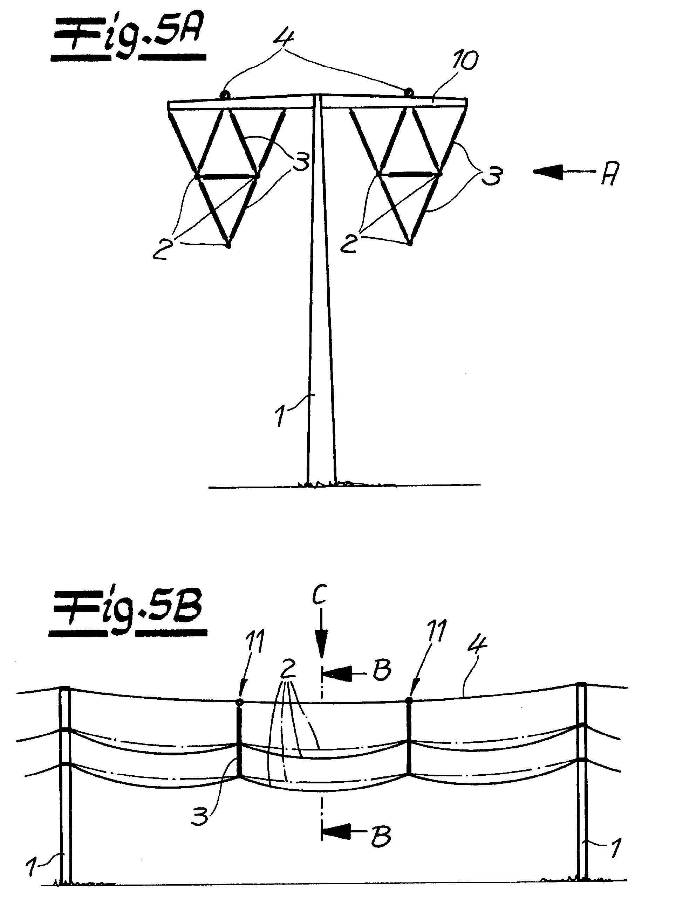

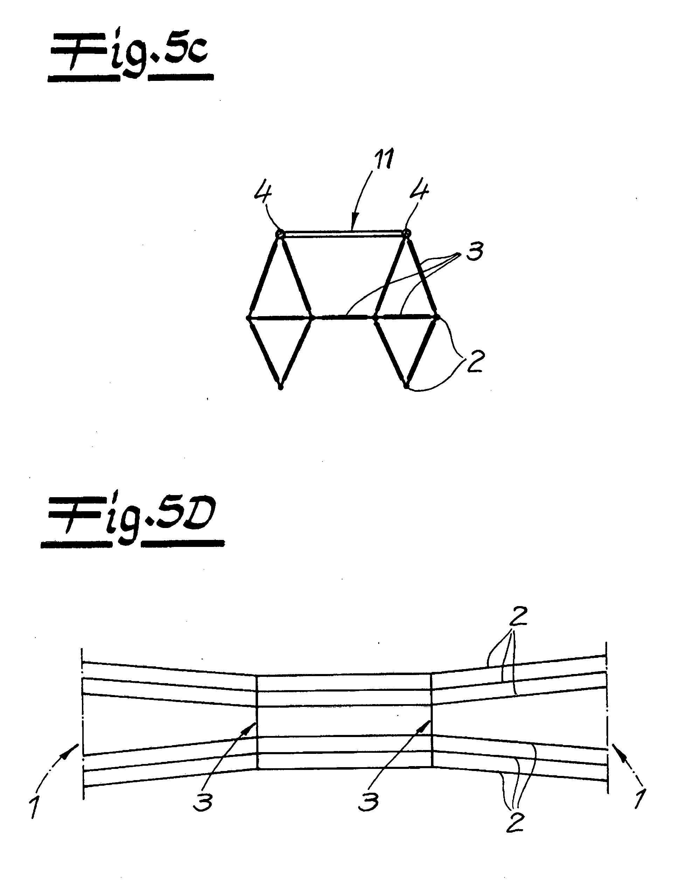

Die Figuren zeigen eine erfindungsgemäße Freileitungseinrichtung für Hochspannungsfreileitungen mit einer Mehrzahl von Masten 1 und mit zwischen den Masten 1 verlaufenden und an den Masten 1 fixierten Leiterseilen 2. Die Leiterseile 2 sind mit Hilfe von Isolatoren 3 an den Masten 1 fixiert bzw. aufgehängt. Die Freileitungseinrichtung weist fernerhin zumindest ein zwischen den Masten 1 verlaufendes und an den Masten 1 fixiertes Stabilisierungsseil 4 auf. In den Ausführungsbeispielen nach den Fig. 1a bis 3 ist lediglich ein Stabilisierungsseil 4 vorgesehen. Bei den Ausführungsformen nach den Fig. 4 und 5 sind zwei Stabilisierungsseile 4 vorhanden. In allen Ausführungsbeispielen nach den Figuren ist das Stabilisierungsseil 4 oberhalb der Leiterseile 2 angeordnet. Vorzugsweise und in den Ausführungsbeispielen ist das Stabilisierungsseil 4 zugleich das Erdseil der Freileitungseinrichtung.

Der Mastabstand a von zwei in Leitungsrichtung hintereinander angeordneten Masten 1 mag im Ausführungsbeispiel 300 m betragen. Vorzugsweise und im Ausführungsbeispiel sind im Übrigen die Leiterseile 2 Komponenten eines Drehstromsystems. Im Ausführungsbeispiel nach den Figuren sind zwei Stromkreise und somit sechs Leiterseile 2 bzw. Phasenseile vorhanden. Es handelt sich hier um eine sogenannte 2-systemige Freileitungseinrichtung.

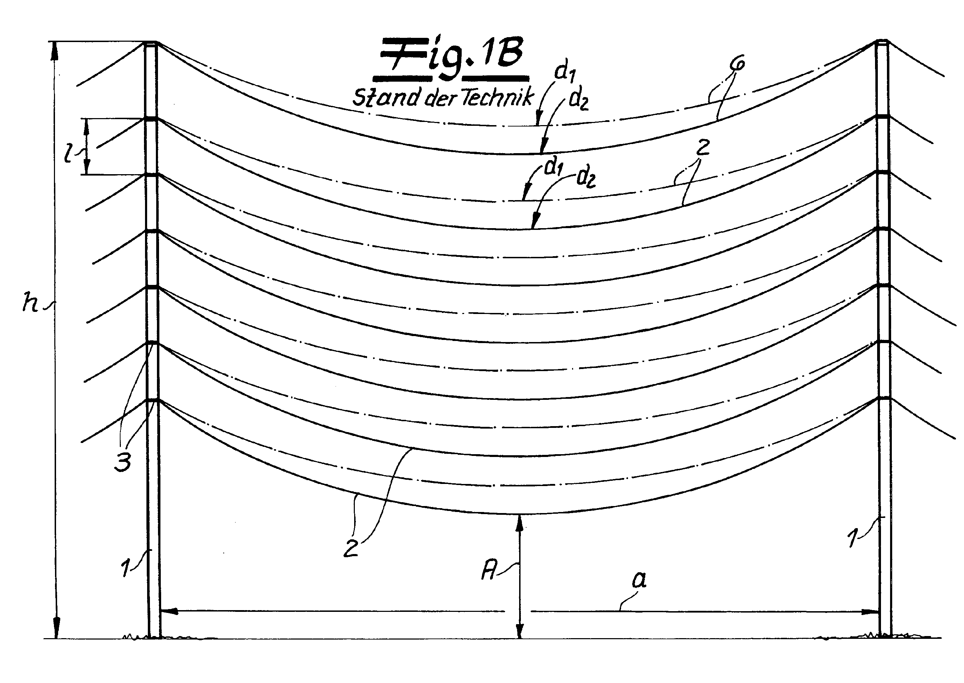

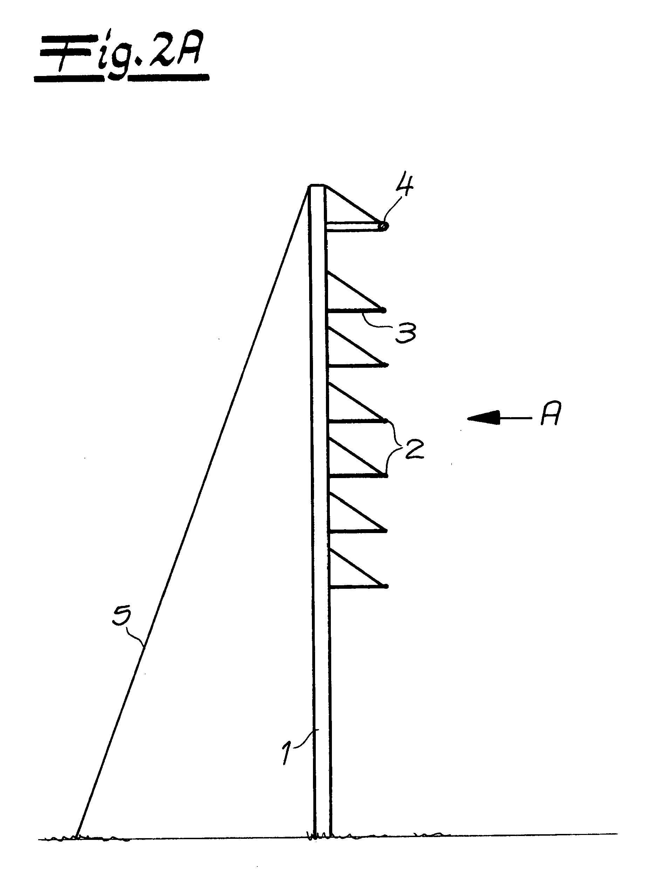

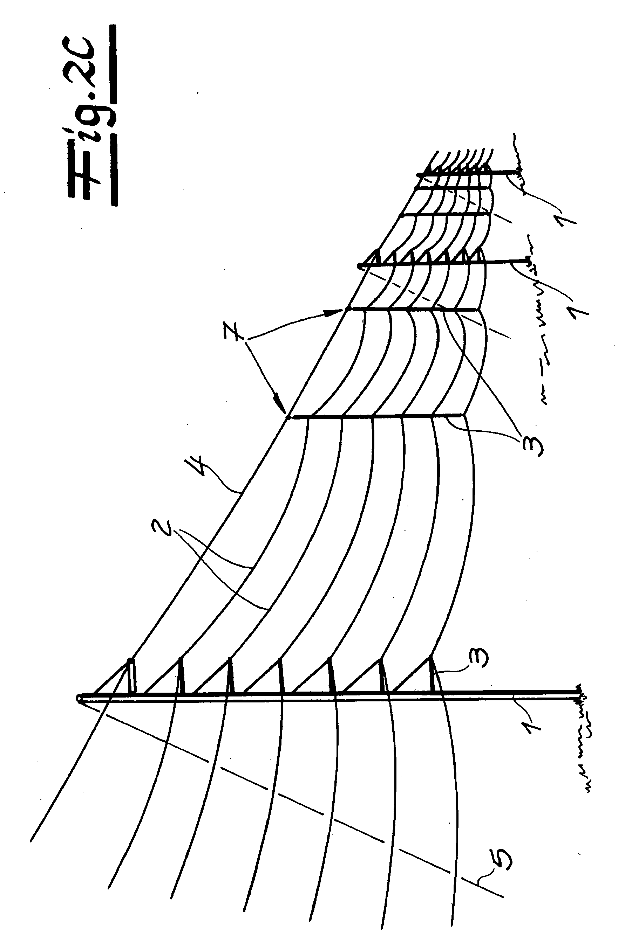

Die Fig. 1a und 1b zeigen eine Freileitungseinrichtung nach dem Stand der Technik. In Fig. 1a ist erkennbar, dass der Mast 1 durch einen Seilanker 5 seitlich stabilisiert wird. Ein entsprechender Seilanker 5 ist auch in der Fig. 2a erkennbar. Die Fig. 1b zeigt den Durchhang d₁ des Erdseils 6 und der Leiterseile 2 bei 10 °C sowie den Durchhang d₂ des Erdseils 6 und der Leiterseile 2 bei 80 °C. Der Durchhang d₁ bzw. d₂ ist hier relativ groß. Aufgrund dieses großen Durchhangs d₁ bzw. d₂ müssen - wie eingangs beschrieben - die Abstände I zwischen den Leiterseilen 2 ebenfalls relativ groß gehalten werden. Der Abstand I zwischen zwei Leiterseilen 2 in der Fig. 1b mag 6 m betragen. Aufgrund dieser relativ großen Abstände I muss die Masthöhe h verhältnismäßig groß gewählt werden, um den vorgeschriebenen Mindestbodenabstand A einhalten zu können. Die Masthöhe h mag bei der in den Fig. 1a und 1b dargestellten Freileitungseinrichtung 63 m betragen.

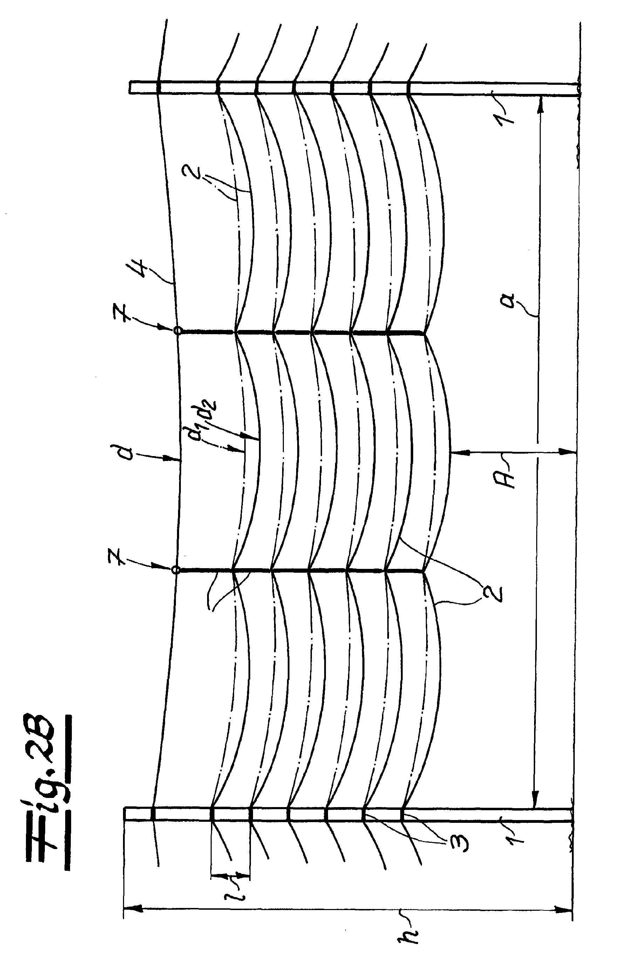

In den Fig. 2a und 2b wird eine in der grundsätzlichen Ausführung der Freileitungseinrichtung nach den Fig. 1a und 1b entsprechende Freileitungseinrichtung dargestellt. Hier sind aber entsprechend der erfindungsgemäßen Lehre die Leiterseile 2 in den Bereichen zwischen zwei Masten 1 an dem als Stabilisierungsseil 4 eingesetzten Erdseil, den Durchhang der Leiterseile 2 reduzierend, aufgehängt. Im Ausführungsbeispiel nach den Figuren erfolgt diese Aufhängung zwischen zwei Masten 1 an zwei Aufhängungspunkten 7 (siehe insbesondere Fig. 2b). Die Leiterseile 2 werden mittels Isolatoren 3 an dem Stabilisierungsseil 4 aufgehängt. In der Fig. 2b ist deutlich erkennbar, dass aufgrund der erfindungsgemäßen Aufhängung der Leiterseile 2 der Durchhang d₁ (10 °C) und d₂ (80 °C) der Leiterseile 2 gegenüber dem in Fig. 1b dargestellten Durchhang d₁ bzw. d₂ deutlich reduziert werden kann. Da somit auch der Durchhang d₂ bei höheren Temperaturen deutlich geringer ist, kann der gegenseitige vertikale Abstand I der Leiterseile 2 kleiner gewählt werden. Auch die Abstände a der Aufhängepunkte der Leiterseile 2 gemäß Fig. 1b können reduziert werden auf beispielsweise ein Drittel, wie in der Fig. 2b dargestellt. Und das führt zur Reduzierung der Abstände I der Leiterseile 2. Er mag im Ausführungsbeispiel nach Fig. 2b 4 m betragen. Wegen dieser deutlich geringeren Abstände I der Leiterseile 2 kann auch die Masthöhe h unter Einhaltung des vorgeschriebenen Mindestbodenabstandes A geringer gewählt werden. Die Masthöhe h mag im Ausführungsbeispiel nach Fig. 2b 44 m betragen. Das ist eine deutliche Reduzierung der Masthöhe h gegenüber der Masthöhe h bei der aus dem Stand der Technik bekannten Freileitungseinrichtung gemäß Fig. 1b.

Es liegt im Übrigen im Rahmen der Erfindung, dass das Stabilisierungsseil 4 zwischen den Masten 1, die Auslenkung der Maste 1 in Leitungsrichtung reduzierend, gespannt ist. Das Stabilisierungsseil 4 wird also mit möglichst geringem Durchhang d gespannt. Aus einer vergleichenden Betrachtung der Fig. 1b und 2b ergibt sich, dass das erfindungsgemäß vorgesehene Stabilisierungsseil 4 in Fig. 2b deutlich stärker gespannt ist und einen deutlich geringeren Durchhang d aufweist als das Erdseil 6 der in Fig. 1b dargestellten Freileitungseinrichtung nach dem Stand der Technik. Aufgrund der Spannung des Stabilisierungsseiles 4 werden die Masten 1 in Bezug auf die Leitungsrichtung optimal stabilisiert. Dadurch wird es möglich, dass die Masten 1 im Vergleich zu vielen aus dem Stand der Technik bekannten Masten schmaler und filigraner ausgeführt werden können. Die Masten 1 wirken dann im Wesentlichen nur noch als Druckstützen.

In der Fig. 3 ist eine weitere Ausführungsform einer erfindungsgemäßen Freileitungseinrichtung dargestellt. Hier bestehen die Masten 1 aus zwei nebeneinander angeordneten Mastelementen 8. Diese Mastelemente 8 sind durch Traversenelemente 9 miteinander verbunden. Aufgrund dieser Stabilisierung der Masten 1 ist ein zusätzlicher Seilanker 5 bei dieser Ausführungsform nicht erforderlich.

Fig. 4 zeigt eine andrere Ausführungsform der erfindungsgemäßen Freileitungseinrichtung. Auch hier weist ein Mast 1 zwei Mastelemente 8 auf, die durch Traversenelemente 9 miteinander verbunden sind. Allerdings sind bei dieser Ausführungsform drei Leiterseile 2 über Isolatoren 3 an das eine Mastelement 8 angeschlossen und die weiteren drei Leiterseile 2 über Isolatoren 3 an das andere Mastelement 8 angeschlossen. Zur Aufhängung der Leiterseile 2 sind hier zwei Stabilisierungsseile 4 vorgesehen, die jeweils unmittelbar über den zugeordneten Leiterseilen 2 angeordnet sind. Drei Leiterseile 2 werden also zwischen den Masten 1 an dem einen Stabilisierungsseil 4 aufgehängt und drei Leiterseile 2 werden zwischen den Masten 1 an dem anderen Stabilisierungsseil 4 aufgehängt.

In den Ausführungsbeispielen nach den Fig. 2a bis 4 und nach einer bevorzugten Ausführungsform ist im Übrigen das Stabilisierungsseil 4 jeweils vertikal unmittelbar oberhalb der Leiterseile 2 angeordnet.

In den Fig. 5a bis 5d wird ebenfalls eine Ausführungsform mit zwei Stabilisierungsseilen 4 dargestellt. Hier ist an der Oberseite eines Mastes 1 eine Traverse 10 vorgesehen, an der die Stabilisierungsseile 4 fixiert sind und an der die Leiterseile 2 über Isolatoren 3 aufgehängt sind. Zwischen den Masten werden auch hier drei Leiterseile 2 an dem einen Stabilisierungsseil 4 aufgehängt und die anderen drei Leiterseile 2 an dem anderen Stabilisierungsseil 4 aufgehängt. Die Aufhängung der Leiterseile 2 an dem Stabilisierungsseil 4 ergibt sich im Übrigen aus der Fig. 5b. Bei dieser Ausführungsform wird im Übrigen der Abstand der Stabilisierungsseile 4 zwischen den Masten 1 mit Hilfe von Verbindungselementen 11 verringert. Das ergibt sich aus einer vergleichenden Betrachtung der Fig. 5c und 5d. Bei den Verbindungselementen 11 mag es sich um Stahlstreben handeln. Aufgrund dieser Abstandsverringerung zwischen den Stabilisierungsseilen 4 wird auch der Abstand zwischen den Leiterseilen 2 verringert (siehe insbesondere Fig. 5d). Deshalb wird in vorteilhafter Weise eine deutlich schmalere Trasse für die erfindungsgemäße Freileitungseinrichtung benötigt.

## Patentansprüche

1. Freileitungseinrichtung, insbesondere für Hochspannungsfreileitungen, - mit einer Mehrzahl von Masten (1) und mit zwischen den Masten (1) verlaufenden und an den Masten (1) fixierten Leiterseilen (2), wobei zumindest ein zwischen den Masten (1) verlaufendes und an den Masten (1) fixiertes Stabilisierungsseil (4) vorgesehen ist, wobei das Stabilisierungsseil (4) oberhalb zumindest eines Teils der Leiterseile (2) angeordnet ist und wobei zumindest ein Teil der Leiterseile (2) in den Bereichen zwischen zwei Masten (1) jeweils an zumindest einem Aufhängungspunkt an dem Stabilisierungsseit (4), den Durchhang der Leiterseile (2) reduzierend, aufgehängt ist, wobei bei einem Mastabstand von 200 bis 600 m, insbesondere bei einem Mastabstand von 250 bis 450 m, die Aufhängung der Leiterseile (2) an dem bzw. an einem Stabilisierungsseil (4) an zumindest zwei Aufhängungspunkten erfolgt, **dadurch gekennzeichnet, dass** das Stabilisierungsseil (4) zwischen den Masten (1), die Auslenkung der Masten (1) in Leitungsrichtung reduzierend, gespannt ist und die Leiterseile (2) zwischen zwei Aufhängungspunkten bei einer Temperatur von 10°C einen Durchhang von 0,6 bis 2 m, bevorzugt von 0,8 bis 1,6 m und sehr bevorzugt von 1 bis 1,4 m aufweisen.

2. Freileitungseinrichtung nach Ansprüch 1, wobei bei einem Mastabstand von 200 bis 600 m, insbesondere bei einem Mastabstand von 250 bis 450 m der Durchhang des Stabilisierungsseils (4) bei einer Temperatur von 10 °C 1 bis 4 m, bevorzugt 1,5 bis 3,5 m und sehr bevorzugt 2 bis 3 m beträgt.

3. Freileitungseinrichtung nach einem der Ansprüche 1 bis 2, wobei der Durchmesser des Stabilisierungsseils (4) 2,5 bis 10 cm, bevorzugt 3 bis 8 cm und sehr bevorzugt 4 bis 7 cm beträgt.

4. Freileitungseinrichtung nach einem der Ansprüche 1 bis 3, wobei das Stabilisierungsseil (4) das Erdseil der Freileitungseinrichtung ist.

5. Freileitungseinrichtung nach einem der Ansprüche 1 bis 4, wobei zumindest zwei Stabilisierungsseile (4) vorgesehen sind und wobei ein Teil der Leiterseile (2) an dem einen Stabilisierungsseil (4) und ein anderer Teil der Leiterseile (2) an dem anderen Stabilisierungsseil (4) aufgehängt ist.

6. Freileitungseinrichtung nach einem der Ansprüche 1 bis 5, wobei übereinander angeordnete Leiterseile (2) einen gegenseitigen bzw. einen vertikalen Abstand von 3 bis 5 m, vorzugsweise von 3,5 bis 4,5 m aufweisen.

7. Freileitungseinrichtung nach einem der Ansprüche 1 bis 6, wobei die Leiterseile (2) Komponenten eines Drehstromsystems sind und drei Leiterseile (2) oder 3 • x Leiterseile (2) (x = ganze Zahl) vorhanden sind oder wobei die Leiterseile (2) Komponenten eines Gleichstromübertragungssystems sind und zwei Leiterseile (2) oder 2 • x Leiterseile (2) (x ganze Zahl) vorhanden sind.

8. Freileitungseinrichtung nach Anspruch 7, wobei die Freileitungseinrichtung zumindest zwei Stromkreise und somit sechs Leiterseile aufweist.

## Claims

1. An overhead line installation in particular for high-voltage overhead lines, with a plurality of pylons (1) and with conductor cables (2) running between the pylons (1) and fixed to the pylons (1), wherein at least one stabilisation cable (4) running between the pylons (1) and fixed to the pylons (1) is provided, wherein the stabilisation cable (4) is disposed above at least a part of the conductor cable (2) and wherein at least a part of the conductor cable (2) in the regions between two pylons (1) is suspended in each case on at least one suspension point on the stabilisation cable (4) reducing the sag of the conductor cable (2), wherein, with a pylon spacing of 200 to 600 m, in particular with a pylon spacing of 250 to 450 m, the suspension of the conductor cable (2) takes place on the or on a stabilisation cable (4) at at least two suspension points, **characterised in that** the stabilisation cable (4) is stretched between the pylons (1), reducing the deflection of the pylons (1) in the line direction, and the conductor cables (2) between two suspension points at a temperature of 10°C have a sag of 0.6 to 2 m, preferably at 0.8 to 1.6 m and very preferably of 1 to 1.4 m.

2. The overhead line installation according to claim 1, wherein, with a pylon spacing of 200 to 600 m, in particular with a pylon spacing of 250 to 450 m, the sag of the stabilisation cable (4) at a temperature of 10°C amounts to 1 to 4 m, preferably 1.5 to 3.5 m and very preferably 2 to 3 m.

3. The overhead line installation according to any one of claims 1 to 2, wherein the diameter of the stabilisation cable (4) amounts to 2.5 to 10 cm, preferably 3 to 8 cm and very preferably 4 to 7 cm.

4. The overhead line installation according to any one of claims 1 to 3, wherein the stabilisation cable (4) is the earth cable of the overhead line installation.

5. The overhead line installation according to any one of claims 1 to 4, wherein at least two stabilisation cables (4) are provided and wherein one part of the conductor cable (2) is suspended on the one stabilisation cable (4) and another part of the conductor cable (2) is suspended on the other stabilisation cable (4).

6. The overhead line installation according to any one of claims 1 to 5, wherein conductor cables (2) disposed above one another have a mutual or vertical spacing of 3 to 5 m, preferably of 3.5 to 4.5 m.

7. The overhead line installation according to any one of claims 1 to 6, wherein the conductor cables (2) are components of an alternating current system and three conductor cables (2) or 3 · x conductor cables (2) (x = an integer) are present and wherein the conductor cables (2) are components of a direct current transmission system and two conductor cables (2) or 2 · x conductor cables (2) (x = an integer) are present.

8. The overhead line installation according to claim 7, wherein the overhead line installation comprises at least two current circuits and therefore six conductor cables.

## Revendications

1. Dispositif de ligne aérienne, en particulier pour lignes aériennes haute tension, comprenant une pluralité de pylônes (1) et de fils conducteurs (2) passant entre les pylônes (1) et fixés sur les pylônes (1), sachant qu'au moins un fil stabilisateur (4) passant entre les pylônes (1) et fixé sur les pylônes (1) est prévu, sachant que le fil stabilisateur (4) est disposé au-dessus d'au moins une partie des fils conducteurs (2) et sachant qu'au moins une partie des fils conducteurs (2) est suspendue dans la partie entre deux pylônes (1) respectivement sur au moins un point de suspension sur le fil stabilisateur (4), réduisant la flèche des fils conducteurs (2), sachant que pour un écart entre pylônes de 200 à 600 m, en particulier pour un écart entre pylônes de 250 à 450 m, la suspension des fils conducteurs (2) sur le, respectivement sur un, fil stabilisateur (4) s'effectue sur au moins deux points de suspension, **caractérisé en ce que** le fil stabilisateur (4) est tendu entre les pylônes (1), réduisant la déviation des pylônes (1) dans le sens de la ligne et que les fils conducteurs (2) en deux points de suspension, présentent une flèche de 0,6 à 2 m, de préférence de 0,8 à 1,6 m et particulièrement de préférence de 1 à 1,4 m, à une température de 10°C.

2. Dispositif de ligne aérienne selon la revendication 1, dans lequel, pour un écart entre pylônes de 200 à 600 m, en particulier pour un écart entre pylônes de 250 à 450 m, la flèche du fil stabilisateur (4) fait de 1 à 4 m, de préférence de 1,5 m à 3,5 m et particulièrement de préférence de 2 à 3 m, à une température de 10°C.

3. Dispositif de ligne aérienne selon la revendication 1 ou 2, dans lequel le diamètre du fil stabilisateur (4) fait de 2,5 à 10 cm, de préférence 3 à 8 cm et particulièrement de préférence de 4 à 7 cm.

4. Dispositif de ligne aérienne selon l'une des revendications 1 à 3, dans lequel le fil stabilisateur (4) est le fil de terre du dispositif de ligne aérienne.

5. Dispositif de ligne aérienne selon l'une des revendications 1 à 4, dans lequel au moins deux fils stabilisateurs (4) sont prévus, et dans lequel une partie des fils conducteurs (2) est suspendue à l'un fil stabilisateur (4) et une autre partie des fils conducteurs (2) est suspendue à l'autre fil stabilisateur (4).

6. Dispositif de ligne aérienne selon l'une des revendications 1 à 5, dans lequel des fils conducteurs (2) disposés les uns au-dessus des autres présentent un écart opposé, respectivement vertical de 3 à 5 m, de préférence de 3,5 à 4,5 m.

7. Dispositif de ligne aérienne selon l'une des revendications 1 à 6, dans lequel les fils conducteurs (2) sont des composantes d'un système de courant triphasé et trois fils conducteurs (2) ou 3 · x fils conducteurs (2) (x = nombre entier) sont présents ou dans lequel les fils conducteurs (2) sont des composantes d'un système de courant continu et deux fils conducteurs (2) ou 2 · x fils conducteurs (2) (x = nombre entier) sont présents.

8. Dispositif de ligne aérienne selon la revendication 7, dans lequel le dispositif de ligne aérienne présente au moins deux circuits de courant et ainsi six fils conducteurs.
